(19) Europäisches Patentamt / European Patent Office / Office européen des brevets

(11) **EP 4 336 960 A1**

(12) **DEMANDE DE BREVET EUROPEEN**

(43) Date de publication:
**13.03.2024 Bulletin 2024/11**

(21) Numéro de dépôt: **23195197.1**

(22) Date de dépôt: **04.09.2023**

(51) Classification Internationale des Brevets (IPC):
***H04W 84/18*** *(2009.01)*

(52) Classification Coopérative des Brevets (CPC):
**H04W 84/18**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **08.09.2022 FR 2208967**

(71) Demandeur: **THALES**
**92400 Courbevoie (FR)**

(72) Inventeurs:
• **GIRARDEAU, Laurent**
**92622 GENNEVILLIERS CEDEX (FR)**
• **BROUET, Jérôme**
**92622 GENNEVILLIERS CEDEX (FR)**
• **SCHOLLER, Franck**
**92622 GENNEVILLIERS CEDEX (FR)**

(74) Mandataire: **Atout PI Laplace**
**Immeuble "Visium"**
**22, avenue Aristide Briand**
**94117 Arcueil Cedex (FR)**

(54) **SYSTÈME ET PROCÉDÉ DE COMMUNICATION SANS FIL CRITIQUE PAR REDONDANCE**

(57) Il est proposé un dispositif de communication (100-n) comprenant un module d'acquisition et de transmission de message (1020), un module de communication directe (1060), un module de communication relayée (1080) et un module de gestion (1040). Le module (1020) est configuré pour acquérir un message initial. Le module (1080) est associé à un identifiant unique. Le module (1040) est configuré pour déterminer un identifiant associé au module (1060) à partir de l'identifiant unique, pour convertir le message initial en un message de communication directe et en un message de communication relayée, et pour déterminer un message identifié de communication directe à partir du message de communication directe et de l'identifiant associé. Le module (1060) est configuré pour émettre le message identifié de communication directe, et le module (1080) est configuré pour émettre le message de communication relayée de manière synchrone avec l'émission du message identifié par le module (1060).

Figure 2

EP 4 336 960 A1

## Description

### Domaine technique

La présente invention concerne de manière générale le domaine des communications sans fil, et en particulier un système et un procédé de communication par redondance.

Dans les systèmes de communication sans fil dite « critique », utilisés par exemple pour des missions civiles ou militaires, il est connu d'utiliser des dispositifs de communication sans fil pouvant fonctionner selon des protocoles de communication en mode relayé, c'est-à-dire avec connexion à une infrastructure réseau, ou en mode direct (c'est-à-dire sans infrastructure réseau). Par exemple, la norme TETRA (*TErrestrial Trunked RAdio* selon l'expression anglo-saxonne correspondante), établie par l'organisme de normalisation ETSI (*European Telecommunications Standards Institute* selon l'expression anglo-saxonne correspondante), porte sur un protocole de communication radio numérique mobile bidirectionnel destiné aux services publiques tels que les services de secours, les forces de polices, les ambulances, les pompiers, les services de transport public et l'armée.

Certains systèmes de communication sans fil critique connus utilisent des dispositifs de communication comprenant un terminal dual intégrant un terminal cellulaire type 4G (mode relayé) avec un terminal radio souvent analogique (mode direct). Cependant, dans de telles solutions, une rupture de communication d'un utilisateur par rapport au reste du groupe de communication sans fil est fréquente, entrainant des pertes de transmission parfois critiques. En effet, un besoin fondamental de tels services publiques est de pouvoir communiquer en toute circonstance (sous et hors couverture réseau), par exemple pour coordonner efficacement leurs actions avec l'ensemble des membres de leur groupe de communication, ou pour transmettre un signal de détresse à au moins un membre de leur groupe de communication ou à d'autres personnes à proximité susceptibles de leur venir en aide.

En communication de groupe, chaque terminal dual peut être sous la couverture d'une infrastructure ou non, à portée d'un autre terminal dual en mode direct ou non. La situation changeant constamment en fonction de la mobilité des utilisateurs des terminaux. Les dispositifs doivent toujours pouvoir communiquer entre eux.

Aujourd'hui, il n'existe aucune solution efficace permettant de répondre aux problèmes de discontinuité de communication entre des dispositifs de communication sans fil critique, disposés sous la couverture d'une infrastructure et/ou de zones non couvertes par cette infrastructure.

Il existe ainsi un besoin pour un système (comprenant des dispositifs) et un procédé capable d'améliorer la gestion de ces communications sans fil critiques.

### Résumé de l'invention

La présente invention vient améliorer la situation en proposant un dispositif de communication sans fil critique comprenant un module d'acquisition et de transmission de message, un module de communication directe et un module de communication relayée. Le module d'acquisition et de transmission de message est configuré pour acquérir un message initial $\mathcal{M}_{0(n)}$, le module de communication directe fonctionnant selon un protocole de communication directe, le module de communication relayée fonctionnant selon un protocole de communication relayée, c'est-à-dire avec connexion à une infrastructure réseau, et étant associé à un identifiant unique $i_{r(n)}$. Le dispositif comprend en outre un module de gestion configuré pour déterminer un identifiant $i_{d(n)}$ associé au module de communication directe à partir de l'identifiant unique $i_{r(n)}$. Le module de gestion est configuré pour convertir le message $\mathcal{M}_{0(n)}$ en un message de communication directe $\mathcal{M}_d$ en fonction du protocole de communication directe et en un message de communication relayée $\mathcal{M}_{r(n)}$ en fonction du protocole de communication relayée du module, le module de gestion étant en outre configuré pour déterminer un message identifié de communication directe $\mathcal{M}_{d(n)}$ à partir du message de communication directe $\mathcal{M}_d$ et de l'identifiant associé $i_{d(n)}$. Le module de communication directe est configuré pour émettre le message identifié de communication directe $\mathcal{M}_{d(n)}$ et le module de communication relayée est configuré pour émettre le message de communication relayée $\mathcal{M}_{r(n)}$ de manière synchrone avec l'émission du message identifié de communication directe $\mathcal{M}_{d(n)}$ par le module de communication directe.

Le module de gestion peut en outre être configuré pour appliquer une fonction f à l'identifiant unique $i_{r(n)}$ pour générer l'identifiant $i_{d(n)}$ associé au module de communication directe, l'identifiant unique $i_{r(n)}$ étant défini dans un format MSISDN, et dans lequel la fonction f est une fonction de troncature.

Le module de communication directe et le module de communication relayée peuvent comprendre chacun une unité de contrôle d'émission configurée pour contrôler des refus d'émission et/ou des autorisations temporaires d'émission de message de communication directe $\mathcal{M}_{d(n)}$ et de message de communication relayée $\mathcal{M}_{r(n)}$. Le module de gestion peut être configuré pour générer un refus d'émission global du dispositif de communication et/ou des autorisations temporaires d'émission globales du dispositif de communication en fonction des refus d'émission et/ou des autorisations temporaires d'émission des modules de communication directe et relayé.

Le module de communication directe peut être configuré pour recevoir un message identifié de communication directe $\mathcal{M}_{d(q)}$ et/ou le module de communication relayée peut être configuré pour recevoir un message de communication relayée $\mathcal{M}_{r(n)}$. Le module de gestion peut être configuré pour convertir le message reçu de communication directe $\mathcal{M}_{d(q)}$ en un message à transmettre $\mathcal{M}_{td(q)}$ et/ou le message reçu de communication relayée $\mathcal{M}_{r(k)}$ en un message à transmettre $\mathcal{M}_{tr(k)}$. Le module d'acquisition et de transmission de message peut être configuré pour transmettre le message à transmettre $\mathcal{M}_{td(q)}$ et/ou le message à transmettre $\mathcal{M}_{tr(k)}$. Le message identifié de communication directe $\mathcal{M}_{d(q)}$ et/ou le message de communication relayée $\mathcal{M}_{r(k)}$ peuvent être transmis par au moins un autre dispositif de communication sans fil critique distinct du premier dispositif de communication.

Selon des modes de réalisation, le module de gestion peut être en outre configuré pour déterminer un identifiant $i_{d(q)}$ relatif au dispositif de communication ayant transmis le message reçu de communication directe $\mathcal{M}_{d(q)}$ et/ou un identifiant $i_{r(k)}$ relatif au dispositif de communication ayant transmis le message reçu de communication relayée $\mathcal{M}_{r(k)}$.

Le module de gestion peut être configuré pour comparer l'identifiant $i_{d(q)}$ et l'identifiant $i_{r(k)}$ pour déterminer si le message identifié de communication directe $\mathcal{M}_{d(q)}$ et le message de communication relayée $\mathcal{M}_{r(k)}$ sont transmis par un même dispositif de communication, ou si le message identifié de communication

directe $\mathcal{M}_{d(q)}$ est transmis par un deuxième dispositif de communication tandis que le message de communication relayée $\mathcal{M}_{r(k)}$ est transmis par un troisième dispositif de communication, en fonction de la comparaison. Le module de gestion peut être configuré pour sélectionner un message à transmettre parmi les messages reçus de communication directe $\mathcal{M}_{d(q)}$ et de communication relayée $\mathcal{M}_{r(k)}$, et en fonction de paramètres donnés.

Le module de gestion peut être en outre configuré pour déterminer un message à répéter de communication relayée $\mathcal{M}_{r(q \to n)}$ à partir du message reçu de communication directe $\mathcal{M}_{d(q)}$ transmis par un deuxième dispositif de communication, de l'identifiant unique $i_{r(n)}$ du module de communication relayée du dispositif communication et de l'identifiant déterminé $i_{d(q)}$ associé au deuxième dispositif de communication. Le module de communication relayée du dispositif communication peut être configuré pour émettre le message à répéter de communication relayée $\mathcal{M}_{r(q \to n)}$.

L'invention fournit également un système de communication sans fil critique comprenant un centre de communication et une infrastructure réseau configurée pour mettre en oeuvre d'un réseau d'interconnexion et un ensemble de dispositifs de communication.

De plus, l'invention fournit un procédé de gestion de communication sans fil critique, mis en oeuvre dans un système comprenant au moins un premier dispositif de communication comprenant un module d'acquisition et de transmission de message, un module de communication directe et un module de communication relayée, le module de communication directe fonctionnant selon un protocole de communication directe, le module de communication relayée fonctionnant selon un protocole de communication relayée et comprenant un identifiant unique $i_{r(n)}$. Le procédé comprend une étape d'initialisation consistant à déterminer un identifiant $i_{d(n)}$ associé au module de communication directe à partir de l'identifiant unique $i_{r(n)}$. Le procédé comprend en outre les étapes consistant à :

- acquérir un message $\mathcal{M}_{0(n)}$ via le module d'acquisition et de transmission de message,
- convertir le message $\mathcal{M}_{0(n)}$ en un message de communication directe $\mathcal{M}_d$ en fonction du protocole de communication directe et en un message de

communication relayée $\mathcal{M}_{r(n)}$ en fonction du protocole de communication relayée du module,

- déterminer un message identifié de communication directe $\mathcal{M}_{d(n)}$ à partir du message de communication directe $\mathcal{M}_d$ et de la donnée d'identification $i_{d(n)}$,

- émettre de façon synchrone le message identifié de communication directe $\mathcal{M}_{d(n)}$ et le message de communication relayée $\mathcal{M}_{r(n)}$, respectivement via le module de communication directe et via le module de communication relayée.

Le procédé de gestion de communication sans fil critique peut comprendre en outre les étapes consistant à :

- recevoir via le module de communication directe un message identifié de communication directe $\mathcal{M}_{d(q)}$ et/ou recevoir via le module de communication relayée au moins un message de communication relayée $\mathcal{M}_{r(k)}$,

- convertir le message reçu de communication directe $\mathcal{M}_{d(q)}$ en un message à transmettre $\mathcal{M}_{td(q)}$ et/ou le message reçu de communication relayée $\mathcal{M}_{r(k)}$ en un message à transmettre $\mathcal{M}_{tr(k)}$,

- transmettre le message à transmettre $\mathcal{M}_{td(q)}$ et/ou le message à transmettre $\mathcal{M}_{tr(k)}$ via le module d'acquisition et de transmission de message. Le message identifié de communication directe $\mathcal{M}_{d(q)}$ et le message de communication relayée $\mathcal{M}_{r(k)}$ peuvent être transmis par au moins un autre dispositif de communication sans fil critique distinct du premier dispositif de communication.

Le procédé de gestion de communication sans fil critique peut comprendre en outre les étapes consistant à déterminer l'identifiant $i_{d(q)}$ relatif au dispositif de communication ayant transmis le message reçu de communication directe $\mathcal{M}_{d(q)}$ et/ou l'identifiant $i_{r(k)}$ relatif au dispositif de communication sans fil critique ayant transmis le message reçu de communication relayée $\mathcal{M}_{r(k)}$,

Dans des modes de réalisation, le procédé de gestion de communication sans fil critique peut comprendre en outre les étapes consistant à :

- comparer l'identifiant $i_{d(q)}$ et l'identifiant $i_{r(k)}$ pour déterminer si le message identifié de communication directe $\mathcal{M}_{d(q)}$ et le message de communication relayée $\mathcal{M}_{r(k)}$ sont transmis par un même dispositif de communication, ou si le message identifié de communication directe $\mathcal{M}_{d(q)}$ est transmis par un deuxième dispositif de communication tandis que le message de communication relayée $\mathcal{M}_{r(k)}$ est transmis par un troisième dispositif de communication, en fonction de la comparaison,

- sélectionner un message à transmettre parmi les messages reçus de communication directe $\mathcal{M}_{d(q)}$ et de communication relayée $\mathcal{M}_{r(k)}$, et en fonction de paramètres donnés.

Le procédé de gestion de communication sans fil critique peut comprendre en outre les étapes consistant à :

- déterminer un message à répéter de communication relayée $\mathcal{M}_{r(q \to n)}$ à partir du message reçu de communication directe $\mathcal{M}_{d(q)}$ transmis par un deuxième dispositif de communication, de l'identifiant unique $i_{r(n)}$ du module de communication relayée du dispositif communication et de l'identifiant déterminé $i_{d(q)}$ associé au deuxième dispositif de communication,

- émettre le message à répéter de communication relayée $\mathcal{M}_{r(q \to n)}$ via le module de communication relayée.

Les modes de réalisation de l'invention permettent d'améliorer la communication entre des dispositifs de communication sans fil critique disposés sous la couverture d'une infrastructure et/ou de zones non couvertes par cette infrastructure.

Ils permettent de générer une solution abordable, en termes de mise en oeuvre et de prix, pour effectuer le maintien des communications entre des dispositifs de communication sans fil critique sur une couverture surfacique supérieure à 99% du territoire et notamment une couverture nationale native.

Ils permettent également de générer une solution abordable, en termes de mise en oeuvre et de prix, pour effectuer le maintien des communications entre des dispositifs de communication sans fil critique hors couverture réseau sur plusieurs centaines de mètres.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un système de communication, selon des modes de réalisation de l'invention.

[Fig.2] La figure 2 est un schéma représentant deux modes de communication sans fil entre deux dispositifs de communication sans fil critique, selon des modes de réalisation de l'invention.

[Fig.3] La figure 3 est un schéma représentant un dispositif de communication sans fil critique, selon des modes de réalisation de l'invention.

[Fig.4] La figure 4 est un organigramme représentant les étapes du procédé de gestion de communication sans fil critique pour l'émission d'un message, selon des modes de réalisation de l'invention.

[Fig.5] La figure 5 est un organigramme représentant des sous-étapes du procédé de gestion de communication sans fil critique pour l'émission d'un message, selon des modes de réalisation de l'invention.

[Fig.6] La figure 6 est un organigramme représentant des sous-étapes du procédé de gestion de communication sans fil critique pour l'émission d'un message, selon des modes de réalisation de l'invention.

[Fig.7] La figure 7 est un organigramme représentant les étapes du procédé de gestion de communication sans fil critique pour la réception de messages, selon des modes de réalisation de l'invention.

[Fig.8] La figure 8 est un organigramme représentant les étapes du procédé de gestion de communication sans fil critique pour la réception de messages, selon des modes de réalisation de l'invention.

[Fig.9] La figure 9 est un organigramme représentant les étapes du procédé de gestion de communication sans fil critique pour la réception et l'émission d'un message, selon des modes de réalisation de l'invention.

Des références identiques sont utilisées dans les figures pour désigner des éléments identiques ou analogues. Pour des raisons de clarté, les éléments représentés ne sont pas à l'échelle.

**Description détaillée**

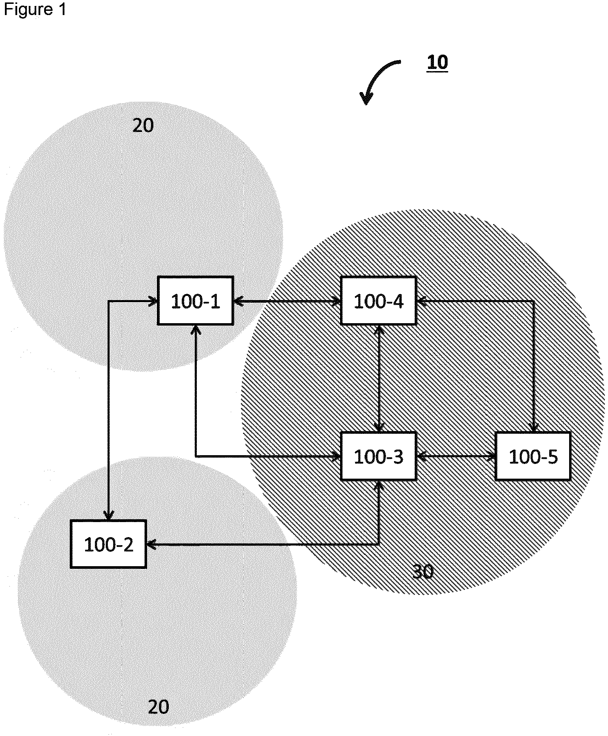

La figure 1 représente schématiquement un système de communication sans fil critique 10 comprenant un ensemble de dispositifs de communication 100-1, 100-2, 100-3, 100-4 et 100-5, selon des modes de réalisation de l'invention.

Le système de communication sans fil critique 10 est utilisé dans le domaine des communications sans fil critiques, par des utilisateurs, dans des situations critiques, par exemple dans des situations liées à la sécurité publique, dans le domaine militaire ou des situations d'urgence. Par exemple et sans limitation, les utilisateurs peuvent être, selon le cas d'usage, des forces de secours ou des forces de sécurité, des ambulanciers, etc.

Un dispositif de communication sans fil critique 100-n (ou dispositif de communication) désigne un équipement utilisateur utilisé par un utilisateur final U-n, pour communiquer avec au moins un autre utilisateur U-(n+1) disposant d'un dispositif de communication 100-(n+1) dans le système de communication sans fil critique 10. L'indice 'n' est associé à différents utilisateurs finaux.

Chaque dispositif de communication 100-n du système de communication sans fil critique 10 est configuré pour communiquer avec au moins un autre dispositif de communication 100-(n+1) du système de communication sans fil critique 10, selon au moins un mode de communication sans fil.

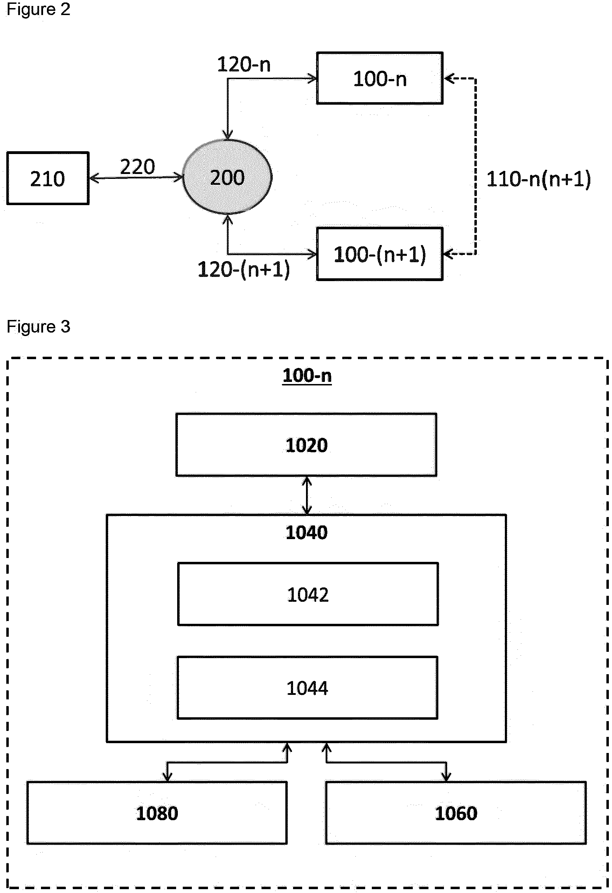

La figure 2 représente schématiquement deux modes de communication sans fil entre deux dispositifs de communication 100-n et 100-(n+1), selon des modes de réalisation de l'invention.

Le premier mode de communication sans fil entre les deux dispositifs de communication 100-n et 100-(n+1) peut être un « mode de communication directe » mis en oeuvre selon un « protocole de communication directe » (c'est-à-dire sans infrastructure réseau). En particulier, un protocole de communication directe peut être par exemple une transmission de radiocommunications définie selon la norme de radio numérique mobile DMR (*Digital Mobile Radio* selon l'expression anglo-saxonne correspondante) établie par l'organisme de normalisation ETSI (*European Telecommunications Standards Institute* selon l'expression anglo-saxonne correspondante).

Dans l'exemple de réalisation représenté sur la figure 2, le dispositif de communication 100-n et le dispositif de communication 100-(n+1) sont connectés entre eux au moyen d'une liaison de communication sans fil directe 110-n(n+1). En outre, pour que la liaison de communication sans fil directe 110-n(n+1) soit effective, les dispositifs 100-n et 100-(n+1) doivent être à portée radio directe.

Le deuxième mode de communication sans fil entre les deux dispositifs de communication 100-n et 100-(n+1) peut être un « mode de communication 'relayée' » mis en oeuvre selon un « protocole de communication 'relayée' » (c'est-à-dire avec connexion à une infrastructure réseau). En particulier, un protocole de communication relayée peut être une transmission de radiocommunications sans fil, par exemple et sans limitation, définie selon la norme de téléphonie mobile LTE (*Long Term Evolution* selon l'expression anglo-saxonne correspondante) et établie par l'organisme de normalisation 3GPP (*3rd Génération Partnership Project* selon l'expression anglo-saxonne correspondante), ou selon une norme de communication postérieure au LTE par exemple associée à la cinquième génération de technologie réseau mobile (5G).

Le système de communication sans fil critique 10 peut comprendre une infrastructure réseau configurée pour la mise en oeuvre d'un réseau d'interconnexion 200. Dans un mode de réalisation, l'infrastructure réseau peut comprendre une architecture centralisée ou distribuée en une pluralité de sites radio (non représentés sur les figures) interconnectés via un réseau d'interconnexion 200 (représenté schématiquement sur la figure 2). Dans un tel mode de réalisation, les sites radio peuvent être par exemple des sites radio mobiles, déployés via une infrastructure véhiculaire mobile. Dans un tel système, un dispositif de communication 100-n correspond à un terminal mobile (ou téléphonique), encore appelé équipement utilisateur UE (acronyme de *'user equipment'*), propre à être connecté au réseau d'interconnexion 200 via un ou plusieurs sites radio.

Dans l'exemple de réalisation représenté sur la figure 2, le dispositif de communication 100-n et le dispositif de communication 100-(n+1) sont connectés au réseau d'interconnexion 200 (et par conséquent entre eux) respectivement par une liaison de communication sans fil relayée 120-n et la transmission (ou liaison) sans fil relayée 120-(n+1).

Selon certains modes de réalisation, le système de communication sans fil critique 10 peut comprendre un centre de communication 210 connecté au réseau d'interconnexion 200 (et donc aux dispositifs de communication 100-n connectés au réseau d'interconnexion 200) par une transmission sans fil 220 (dite 'transmission sans fil centrale'). Par exemple et sans limitation, un centre de communication 210 peut être un centre de commandement et/ou un centre de gestion de données.

Chaque dispositif de communication 100-n du système de communication sans fil critique 10 est disposé dans une zone géographique pouvant comprendre une ou plusieurs zones géographiques avec couverture du réseau d'interconnexion 200, appelées zones avec couverture 20, et au moins une zone géographique sans couverture (ou hors couverture) du réseau d'interconnexion 200, appelées zones hors couverture 30. Dans l'exemple de réalisation représenté sur la figure 1, les dispositifs de communication 100-1 et 100-2 sont disposés dans des zones avec couverture 20, alors que les dispositifs de communication 100-3, 100-4 et 100-5 sont disposés dans une zone sans couverture 30. Les dispositifs de communication 100-1 et 100-2 sont alors « en ligne » ou « en réseau », tandis que les dispositifs de communication 100-3, 100-4 et 100-5 sont « hors ligne » ou « hors réseau » et ne peuvent pas communiquer entre eux ou avec les dispositifs de communication 100-1 et 100-2, selon le mode de communication relayée.

De manière générale, deux dispositifs de communication 100-n et 100-(n+1) « en ligne » peuvent communiquer entre eux selon le mode de communication relayée. Deux dispositifs de communication 100-n et 100-(n+1) « en ligne » peuvent en outre communiquer entre eux selon le mode de communication directe s'ils sont à portée radio directe. Si l'un ou les deux dispositifs de communication 100-n et 100-(n+1) sont « hors ligne », les deux dispositifs ne peuvent pas communiquer entre eux selon le mode de communication relayée, et peuvent communiquer entre eux selon le mode de communication directe s'ils sont à portée radio directe.

Chaque dispositif de communication 100-n du système de communication sans fil critique 10 est configuré pour être capable :

- d'émettre un même message de façon synchrone à la fois au travers du mode de communication relayée et au travers du mode de communication directe ; et
- de recevoir des messages émis au travers du mode de communication relayée et/ou au travers du mode de communication directe par d'autres dispositifs de communication 100-(n+1).

Tel qu'utilisé ici, le terme 'message', en émission, peut désigner un ensemble de données associé à une ou plusieurs informations à transmettre par un utilisateur U-n disposant d'un dispositif de communication 100-n, à destination de un ou plusieurs autres utilisateurs U-(n+1) disposant d'un dispositif de communication 100-(n+1) ayant des fonctions similaires ou équivalentes aux fonctions du dispositif de communication 100-n. Similairement, le terme 'message', en réception, fait référence à un ensemble de données associé à une ou plusieurs informations reçues par un utilisateur U-n disposant d'un dispositif de communication 100-n, et provenant d'un autre utilisateur U-(n+1) disposant d'un dispositif de communication 100-(n+1). Par exemple et sans limitation, un message peut être un signal acoustique (i.e. un message vocal ou audio, un message sonore, etc.) et/ou un signal visuel (i.e. une ou plusieurs images, un message texte, etc.).

La figure 3 représente schématiquement un dispositif de communication 100-n comprenant un module d'acquisition et de transmission de message 1020, un module de gestion 1040, un module de communication directe 1060 et un module de communication relayée 1080, selon des modes de réalisation de l'invention.

Le module d'acquisition et de transmission de message 1020 peut comprendre une ou plusieurs interfaces homme-machine. Ces interfaces homme-machine peuvent comprendre un ou plusieurs moyens d'acquisition de message configurés pour acquérir un message $\mathcal{M}_{0(n)}$ (appelé aussi un message initial $\mathcal{M}_{0(n)}$) généré par un utilisateur U-n, par le dispositif de communication sans fil critique 100-n. Ces interfaces homme-machine peuvent comprendre également un ou plusieurs moyens de transmission de messages $\mathcal{M}_{t(n+1)}$, reçus par le dispositif de communication 100-n, à l'utilisateur U-n, ces messages $\mathcal{M}_{t(n+1)}$ ayant été précédemment générés par des utilisateurs U-(n+1) et émis par ces derniers à destination de l'utilisateur U-n. Par exemple et sans limitation, le module d'acquisition et de transmission de message 1020 peut comprendre un microphone, un haut-parleur, un clavier et/ou un écran d'affichage.

Le module de communication directe 1060 du dispositif de communication 100-n est configuré pour émettre et recevoir un ou des messages au travers de la liaison de communication sans fil directe 110-n(n+1). Par exemple et sans limitation, le module de communication directe 1060 peut comprendre une unité matérielle telle qu'une carte électronique appelée 'module DMR' par exemple.

Dans des modes de réalisation, le module de communication directe 1060 peut en outre être configuré pour sécuriser par cryptage les messages à émettre selon une 'clé de cryptage des communications directes', par exemple commune aux dispositifs de communication du système de communication sans fil critique 10. Par conséquent, le module de communication directe 1060 peut en outre être configuré pour décrypter les messages reçus selon la clé de cryptage commune des communications directes.

Le module de communication relayée 1080 du dispositif de communication 100-n est configuré pour émettre et/ou recevoir un ou des messages au moyen de la transmission sans fil relayée 120-n du réseau d'interconnexion 200. Par exemple et sans limitation, le module de communication relayée 1080 peut être un terminal téléphonique (i.e. équipement utilisateur ou UE), propre à être connecté au réseau d'interconnexion 200 via un ou plusieurs sites radio. Le module de communication relayée 1080 peut comprendre une application dédiée aux communications de missions critiques, ou communications de groupe, encore appelée application MCX (*Mission-Critical Services* en langue anglo-saxonne). Dans un tel mode de réalisation, selon le protocole de communication relayée, le module de communication relayée 1080 des dispositifs du système 10 peut comprendre un client MCX tandis que le centre de communication 210 comprend un serveur MCX.

Le module de communication relayée 1080 du dispositif de communication 100-n est associé à un identifiant unique noté $i_{r(n)}$, identifiant le dispositif de communication 100-n.

Dans des modes de réalisation, le module de communication relayée 1080 peut en outre être configuré pour sécuriser par cryptage les messages à émettre selon une clé de cryptage des communications relayées, qui peut, par exemple, être commune aux dispositifs de communication du système de communication sans fil critique 10. Le module de communication relayée 1080 peut alors être configuré pour décrypter les messages reçus selon la clé de cryptage commune des communications relayées.

Le centre de communication 210 peut générer via le réseau 200 le partage de clés de cryptage des communications relayées parmi l'ensemble des modules de communication relayée 1080 des dispositifs du système de communication sans fil critiques 10, lorsque ces dispositifs sont tous « en ligne » (i.e. connectés au réseau 200) dans un mode opérationnel. Un tel partage de clés peut être mis en oeuvre au début d'une mission ou d'une intervention spécifique menée par les utilisateurs du système 10.

Le module d'acquisition et de transmission de message 1020, ainsi que le module de communication directe 1060 et le module de communication relayée 1080 peuvent chacun être connecté au module de gestion 1040. Le module de gestion 1040 est alors configuré pour collecter et traiter les messages à émettre provenant du module 1020 (acquis de l'utilisateur U-n) et pour les transférer vers les deux modules de communication 1060 et 1080. Le module de gestion 1040 est en outre configuré pour collecter et traiter des messages reçus provenant des deux modules de communication 1060 et 1080 et les transférer vers le module 1020 (à transmettre à l'utilisateur U-n).

Selon certains modes de réalisation, le centre de communication 210 peut générer via le réseau 200 le partage de clés de cryptage des communications directes auprès de l'ensemble des dispositifs du système de communication sans fil critique 10, lorsque ceux-ci sont tous « en ligne ». Avantageusement, ce partage de clés peut être mis en oeuvre au début d'une mission ou d'une intervention spécifique menée par les utilisateurs du système 10. Pour cela, le centre de communication 210 peut être configuré pour transmettre une clé de cryptage des communications directes au module de communication relayée 1080 des différents dispositifs. Le module de gestion 1040 (relié au module de communication relayée 1080) peut alors être configuré pour transmettre cette clé de cryptage des communications directes au module de communication directe 1060, permettant un renouvellement rapide (par exemple, à chaque mission et/ou intervention) des clés dans ce mode de communication spécifique.

Selon certains modes de réalisation, le module d'acquisition et de transmission de message 1020 peut être un dispositif émetteur-récepteur portatif ou émetteur-récepteur bidirectionnel portatif. Par exemple, le module d'acquisition et de transmission de message 1020 peut être un 'micro-poire' comprenant des moyens d'acquisition et de transmission de messages vocaux, tels que par exemple un micro, un haut-parleur et/ou des boutons de prises d'alternat. Ce micro-poire peut également présenter un écran permettant la lecture des messages texte reçus. Le module d'acquisition et de transmission de message 1020 peut par exemple être un smartphone configuré pour la saisie et/ou la lecture de messages de type texte ou audio, pour la saisie et/ou la consultation de positions de géolocalisation, l'acquisition et/ou la visualisation d'images.

Selon des modes de réalisation, les modules 1020, 1080 et 1060 peuvent être intégrés dans un même élément. Dans d'autres modes de réalisation, les modules 1020, 1080 et/ou 1060 peuvent comprendre des connectiques permettant d'échanger entre eux et/ou avec d'autres modules externes.

Dans des modes de réalisation, le module de module de gestion 1040 peut comprendre une unité matérielle (comme une carte électronique par exemple) s'interfaçant au module de communication directe 1060 et au module de communication relayée 1080. Le module de gestion 1040 peut en outre comprendre une unité logicielle et/ou micro-logicielle (i.e. logiciel embarqué) implémentée ou intégrée au module de communication directe 1060, au module de communication relayée 1080 et/ou au module d'acquisition et de transmission de message 1020.

La figure 3 représente une structure du module de gestion 1040, selon des modes de réalisation de l'invention.

Dans certains modes de réalisation, le module de gestion 1040 comprend une unité de traitement de message 1042 et une unité d'identification 1044.

L'unité logicielle et/ou micro-logicielle du module de gestion 1040 peut comprendre l'unité de traitement de message 1042 et l'unité d'identification 1044.

L'unité de traitement de message 1042 est configurée pour convertir un message $\mathcal{M}_{0(n)}$, acquis via le module d'acquisition de message 1020, en un message de communication directe $\mathcal{M}_d$ en fonction du protocole de communication directe associé au module de communication directe 1060. L'unité de traitement de message 1042 est configurée pour convertir le même message $\mathcal{M}_{0(n)}$ en un message de communication relayée $\mathcal{M}_r$ en fonction du protocole de communication relayée associé au module de communication relayée 1080.

En particulier, un message émis par un module de communication relayée 1080 au sein du réseau d'interconnexion 200 comprend une donnée d'identification associée à l'identifiant unique $i_{r(n)}$ de ce module de communication relayée 1080. L'identifiant unique $i_{r(n)}$ peut alors être reconnu par n'importe quel module de communication relayée 1080 et/ou module de gestion 1040 d'un dispositif 100-(n+1) du système de communication sans fil critique 10 recevant et/ou traitant ce message, alors noté

L'unité d'identification 1044 est configurée pour déterminer un identifiant $i_{d(n)}$ associé au module de communication directe 1060 du dispositif de communication 100-n, à partir de l'identifiant unique $i_{r(n)}$ du module de communication relayée 1080 du même dispositif de communication 100-n.

En particulier, l'unité d'identification 1044 peut être configurée pour appliquer une fonction f à un identifiant unique $i_r$ pour générer un identifiant associé $i_d$ telle que :

$$i_d = f(i_r) \qquad (01)$$

Dans l'équation (01), par exemple et sans limitation, la fonction f peut être une fonction de traduction ou de transformation de format, ou encore une application bijective, injective, et/ou surjective.

Dans certains modes de réalisation, un identifiant unique $i_r$ peut être un identifiant MCX comprenant un nombre $N_r$ de digits (par exemple $N_r{=}10$) et défini dans un format MSISDN (*Mobile Station International Subscriber Directory Number* selon l'expression anglo-saxonne correspondante). La fonction f peut alors être une fonction de troncature telle que l'identifiant associé $i_d$ comprend un nombre $N_d$ de digits et tel que $N_d$ est inférieur à $N_r$ ($N_d{<}N_r$ et par exemple $N_d{=}7$ correspondant aux 7 premiers digits de l'identifiant MCX appelés les 7 digits "call ID").

Avantageusement, l'unité de traitement de message 1042 est configurée pour ajouter au message de communication directe $\mathcal{M}_d$ à émettre par un module de communication directe 1060 une donnée d'identification définie par cet identifiant associé $i_{d(n)}$. Par conséquent, l'identifiant associé $i_{d(n)}$ peut être reconnu par n'importe quel module de gestion 1040 d'un dispositif 100-(n+1) du système de communication sans fil critique 10 traitant ce message, alors noté $\mathcal{M}_{d(n)}$.

Dans des modes de réalisation, l'unité de traitement de message 1042 peut être configurée pour assurer l'émission de façon synchrone du message de communication directe $\mathcal{M}_{d(n)}$ et du message de communication relayée $\mathcal{M}_{r(n)}$ (émis par le module de communication directe 1060 et le module de communication relayée 1080 respectivement), notamment lorsque le dispositif de communication 100-n est connecté au réseau d'interconnexion 200.

Selon certains modes de réalisation, le module de communication directe 1060 et le module de communication relayée 1080 peuvent comprendre chacun une unité de contrôle d'émission (non représentée sur les figures). Ces unités de contrôle d'émission (encore appelées unités de « contrôle de parole », de « prise de communication », de « prise d'alternat » ou encore unités de *floor-control* en langue anglo-saxonne) sont configurées pour générer et/ou contrôler des « informations d'alternat » accordées dynamiquement aux différents modules de communication, relayée ou directe, des dispositifs de communication critique compris dans un système de communication sans fil critique 10. Les informations d'alternat peuvent comprendre des refus d'émission et/ou des autorisations temporaires d'émission. Un 'refus d'émission' peut être une notification indiquant que l'émission d'un message est refusée. Une 'autorisation temporaire d'émission' peut être une notification indiquant que l'émission d'un message est autorisée. Ainsi, les unités de contrôle d'émission, selon le mécanisme d'alternat, permettent de gérer les conditions de concurrence d'émission entre les dispositifs de communication critiques et de garantir une utilisation mutuellement exclusive des bandes passantes d'émission, afin d'éviter des recouvrements éventuels de messages (i.e. interférences). Ceci permet d'assurer que chaque utilisateur du système peut être écouté correctement.

Par conséquent, le module de gestion 1040 peut être configuré pour assurer la transmission et la réception des messages entre dispositifs.

Le module de gestion 1040 peut en outre être configuré pour effectuer la duplication des messages entre le mode relayé et le mode direct, ainsi que pour effectuer l'adaptation des messages aux formats attendus dans chacun des modules 1080 et 1060, et du module 1020.

Le module de gestion 1040 peut également prendre en compte des commandes locales de l'utilisateur U-n du dispositif 100-n. Certaines commandes locales peuvent être par exemple la prise d'appel (ou la prise d'alternat), ainsi qu'une signalisation associée à l'acquisition, à la réception et/ou à la transmission de messages, vers chacun des modules 1020, 1080 et 1060. Le module de gestion 1040 peut en outre être configuré pour appliquer un ensemble de règles configurables prenant en entrée les commandes locales et les signalisations effectuées par l'utilisateur U-n pour appliquer des traitements aux différents messages.

Par exemple et sans limitation, en réponse à la commande « prise d'alternat » effectuée par l'utilisateur U-n, une signalisation d'appel peut être générée par le module 1020 vers les modules 1080 et 1060. Les modules 1080 et 1060 peuvent alors être configurés pour acquitter cette signalisation au module de gestion 1040. En réponse à l'acquittement de chacun des deux modules 1080 et 1060, le module de gestion 1040 peut être configuré pour dupliquer et formater un message (initial) vocal acquis par le module 1020, puis pour l'envoyer aux deux modules 1080 et 1060.

Par exemple et sans limitation, l'unité de contrôle d'émission du module de communication directe 1060 peut être mise en oeuvre selon le protocole « poli » (ou *polite* selon l'expression anglo-saxonne correspondante) de la norme DMR (chapitre 5.2.2.4 ETSI TS 102 361-1 V2.5.1). L'unité de contrôle d'émission peut être reliée au module de gestion 1040, ou intégrée dans le module de gestion 1040, de manière à gérer les informations d'alternat du module 1060. L'unité de contrôle d'émission du module de communication relayée 1080 peut être mise en oeuvre par l'application MCX de manière à gérer les informations d'alternat du module 1080 vers le réseau d'interconnexion 200. L'unité de contrôle d'émission du module de communication relayée 1080 peut de plus transférer les informations d'alternat du module 1080 selon un protocole spécifique vers le module de gestion 1040.

Dans des modes de réalisation, lorsque le module de communication relayée 1080 comporte un 'refus d'émission', l'application MCX peut générer un signalement sur le terminal du module de communication relayée 1080 via des moyens de transmission d'information à l'utilisateur U-n (par exemple jouer une tonalité en retour audio). De façon similaire, lorsque le module de communication relayée 1080 comporte un 'refus d'émission' et/ou lorsque le module de communication directe 1060 comporte un 'refus d'émission', le module de gestion 1040 peut générer un signalement sur le module d'acquisition et de transmission de message 1020.

Avantageusement, le module de gestion 1040, recevant les informations d'alternat du module de communication relayée 1080 et/ou du module de communication directe 1060, peut être configuré pour générer un 'refus d'émission global' du dispositif de communication 100-n, interdisant toute prise d'alternat par n'importe quel mode de communication. En particulier, le module de gestion 1040 recevant un 'refus d'émission' du module de communication relayée 1080 (ou du module de communication directe 1060) peut transférer le 'refus d'émission' au module de communication directe 1060 (ou du module de communication relayée 1080). Un 'refus d'émission' peut être signalé à l'utilisateur U-n via le module 1020 par exemple, qui peut être configuré alors pour émettre une tonalité audio spécifique.

Dans un mode de réalisation, pour un dispositif de communication 100-n situé exclusivement à portée du réseau 200 (c'est-à-dire « en ligne » et hors portée radio direct, et pouvant communiquer seulement selon le mode de communication relayée), le module de gestion 1040 peut ne prendre en compte que les informations d'alternat du module de communication relayée 1080, afin d'interdire ou d'autoriser l'émission de messages de communication relayée $\mathcal{M}_{r(n)}$ à transmettre selon le mode de communication relayée. De façon similaire, pour un dispositif de communication 100-n situé exclusivement à portée radio directe (c'est-à-dire « hors ligne »), le module de gestion 1040 peut ne prendre en compte que les informations d'alternat du module de communication directe 1060, afin d'interdire ou d'autoriser l'émission de messages de communication directe $\mathcal{M}_{d(n)}$ à transmettre.

Dans un mode de réalisation, le module d'acquisition et de transmission de message 1020 peut comprendre un moyen d'acquisition de message appelé PTT (ou *Push-to-talk* ou *press-to-transmit* selon l'expression anglo-saxonne correspondante) qui doit être enclenché momentané de manière à passer du mode de transmission de message au mode d'acquisition de message. Ainsi, si le module de gestion 1040 reçoit au moins un 'refus d'émission' du module de communication relayée 1080 et/ou du module de communication directe 1060, le moyen d'acquisition de message (non représenté sur les figures) ne peut pas être enclenché pour acquérir de message $\mathcal{M}_{0(n)}$.

Dans des modes de réalisation, l'unité de traitement de message 1042 comprend une sous-unité de sauvegarde de messages (tel qu'un buffer).

En particulier, la sous-unité de sauvegarde de messages peut être configurée pour garder en mémoire de façon temporaire les messages $\mathcal{M}_{d(n)}$ et $\mathcal{M}_{r(n)}$ à transmettre jusqu'à ce que les 'autorisations temporaires d'émission' soient détectées à la fois dans les informations d'alternat provenant du module de communication relayée 1080 et dans les informations d'alternat provenant du module de communication directe 1060.

De façon générale, le module de communication directe 1060 du dispositif de communication 100-n est configuré pour recevoir des messages de communication directe $\mathcal{M}_{d(n+1)}$ transmis de dispositifs 100-(n+1) au travers de la liaison de communication sans fil directe 110-n(n+1). Le module de communication relayée 1080 du dispositif de communication 100-n est configuré pour recevoir des messages de communication relayée $\mathcal{M}_{r(n+1)}$ transmis de dispositifs 100-(n+1) par l'intermédiaire des transmissions sans fil relayée 120-n et 120-(n+1) du réseau d'interconnexion 200.

L'unité de traitement de message 1042 peut alors être configurée pour traiter les messages $\mathcal{M}_{r(n+1)}$ et/ou les messages $\mathcal{M}_{d(n+1)}$ reçus par les modules 1060 et 1080. En particulier, l'unité de traitement de message 1042 peut être configurée pour convertir les messages $\mathcal{M}_{r(n+1)}$ et/ou $\mathcal{M}_{d(n+1)}$ en des messages convertis, encore appelés 'messages à transmettre' (notés $\mathcal{M}_{tr(n+1)}$ et $\mathcal{M}_{td(n+1)}$) via le module d'acquisition et de transmission de message 1020.

Dans certains modes de réalisation, un dispositif de communication 100-n peut recevoir de façon simultanée :

- un message de communication relayée $\mathcal{M}_{r(k)}$ émis par un dispositif de communication 100-k, et

- un message de communication directe $\mathcal{M}_{d(q)}$ émis par un dispositif de communication 100-q.

Tel qu'utilisé ici, le terme de 'réception simultanée' peut faire référence à la réception de message pendant un intervalle de temps $\delta$ défini qui peut être, par exemple et de façon non limitative, le temps de traitement du module de gestion 1040 et/ou de l'unité de traitement de message 1042.

Dans des modes de réalisation, l'unité d'identification 1044 peut être configurée pour déterminer :

- l'identifiant unique $i_{r(k)}$ relatif aux données d'identification du message de communication relayée $\mathcal{M}_{r(k)}$, et

- l'identifiant associé $i_{d(q)}$ relatif aux données d'identification du message de communication directe $\mathcal{M}_{d(q)}$.

Le module de gestion 1040 du premier dispositif de communication 100-n peut alors être configuré pour comparer les identifiants $i_{r(k)}$ et $i_{d(q)}$ pour déterminer, en fonction du résultat de la comparaison, si le message identifié de communication directe $\mathcal{M}_{d(q)}$ et le message de communication relayée $\mathcal{M}_{r(k)}$ sont transmis par un même et unique deuxième dispositif de communication 100-(n+1), ou si le message identifié de communication directe $\mathcal{M}_{d(q)}$ est transmis par un deuxième dispositif de communication 100-q tandis que ledit message de communication relayée $\mathcal{M}_{r(k)}$ est transmis par un troisième dispositif de communication 100-k. Par exemple, cette comparaison peut être mise en oeuvre par l'unité de traitement de message 1042 et/ou l'unité d'identification 1044.

Dans le cas où deux dispositifs de communication critiques distincts 100-k et 100-q sont utilisés (i.e. distingués), les conditions suivantes peuvent être satisfaites :

- le dispositif de communication 100-k est agencé exclusivement à portée du réseau de manière à ce qu'aucun message de communication directe $\mathcal{M}_{d(k)}$ ne puisse être réceptionné par un autre dispositif de communication sans fil critique du système 10, et

- si le dispositif de communication 100-q est agencé exclusivement à portée radio directe de manière à ce qu'aucun message de communication relayée $\mathcal{M}_{r(k)}$ ne puisse être envoyé et/ou réceptionné par un autre dispositif de communication sans fil critique du système 10.

Dans certains modes de réalisation, lorsque les identifiants $i_{r(k)}$ et $i_{d(q)}$ désignent deux dispositifs distincts, l'unité de traitement de message 1042 peut être configurée pour enregistrer le message à transmettre $\mathcal{M}_{tr(k)}$ associé au message de communication relayée $\mathcal{M}_{r(k)}$ provenant du dispositif de communication 100-k, par exemple dans une mémoire de sauvegarde telle qu'une sous-unité de sauvegarde. L'unité de traitement de message 1042 peut en outre être configurée pour envoyer au module d'acquisition et de transmission de message 1020 le message à transmettre $\mathcal{M}_{td(q)}$ associé au message de communication directe $\mathcal{M}_{d(q)}$ provenant du dispositif de communication 100-q. L'unité de traitement de message 1042 peut ensuite être configurée pour envoyer au module 1020 le message à transmettre $\mathcal{M}_{tr(k)}$ associé au message de communication relayée $\mathcal{M}_{r(k)}$ provenant du dispositif de communication 100-k (et optionnellement le supprimer de la mémoire de sauvegarde).

L'unité de traitement de message 1042 peut également être configurée pour enregistrer au préalable le message $\mathcal{M}_{td(q)}$, envoyer le message $\mathcal{M}_{td(k)}$, puis envoyer le message $\mathcal{M}_{td(q)}$. L'ordre de sauvegarde ou d'envoi des messages, reçus de façon simultanée, peut être défini selon un ou plusieurs paramètres de priorité prédéfinis ou prédéterminés. Des exemples de paramètres de priorité comprennent, par exemple et sans limitation, la taille du message à transmettre, le temps effectif d'arrivée du message (dans ou en dehors de l'intervalle de temps $\delta$), l'origine du message à transmettre (i.e. l'identifiant $i$) et/ou des informations d'urgence compris dans le message à transmettre.

Alternativement, dans le cas où un seul dispositif de communication 100-(n+1) est utilisé (i.e. distingué), le message de communication relayée $\mathcal{M}_{r(k)}$ et le message de communication directe $\mathcal{M}_{d(q)}$ ont été émis de façon synchrone et sont issus du même message $\mathcal{M}_{0(n+1)}$. Un seul des messages $\mathcal{M}_{tr(n+1)}$ et $\mathcal{M}_{td(n+1)}$ peut alors être transmis à l'utilisateur U-n via le module d'acquisition et de transmission de message 1020.

Dans des modes de réalisation, lorsque les identifiants $i_{r(k)}$ et $i_{d(q)}$ se rapportent à un même dispositif 100-(n+1), l'unité de traitement de message 1042 peut être configurée pour sélectionner un message parmi le message de communication relayée $\mathcal{M}_{r(k)}$ et le message de communication directe $\mathcal{M}_{d(q)}$. Avantageusement, dans ce cas, l'unité de traitement de message 1042 peut ne pas convertir les messages $\mathcal{M}_{r(k)}$ ou $\mathcal{M}_{d(q)}$ en messages $\mathcal{M}_{tr(k)}$ et $\mathcal{M}_{td(q)}$ à transmettre. En outre, la sélection du message de communication $\mathcal{M}_{r(k)}$ ou $\mathcal{M}_{d(q)}$ peut être définie selon un ou plusieurs paramètres de sélection prédéfinis ou prédéterminés. Des exemples de paramètres de sélection comprennent, par exemple et sans limitation, la qualité du message reçu et/ou le temps effectif d'arrivée du message (dans ou en dehors de l'intervalle de temps $\delta$).

Il est à noter que la différence de temps $\tau$ du délai de propagation d'un signal audio selon un mode de communication directe par rapport au délai de propagation d'un même signal audio, selon un mode de communication relayée, peut être de l'ordre de 100 ms, la transmission par mode de communication directe étant de façon générale plus rapide. Par conséquent, et notamment si $\delta > \tau$, une commande de sélection (ou de priorité) prédéterminée peut être par exemple le choix automatique du message de communication directe $\mathcal{M}_{d(q)}$ à traiter

et à transmettre à l'utilisateur U-n via le module d'acquisition et de transmission de message 1020. En outre, des paramètres de sélection (ou de priorité) donnés peuvent prendre en compte cette différence de temps $\tau$ de manière à vérifier que deux messages $\mathcal{M}_{r(k)}$ et $\mathcal{M}_{d(q)}$ ont été émis de façon synchrone et sont issus ou non du même message $\mathcal{M}_{0(n+1)}$. Ceci permet d'éviter les phénomènes dits « phénomènes d'écho » lors de la transmission de messages à l'utilisateur U-n (ou basculement) du mode de communication directe vers le mode de communication relayée.

Il est à noter que des silences naturels de la voix (de durée notée $\varepsilon$) sont du même ordre de grandeur que la différence de temps $\tau$ des délais de propagation (c'est-à-dire $\varepsilon$ compris par exemple entre 100 et 200 ms). Ainsi, des paramètres de sélection ou de priorité peuvent prendre en compte cette durée $\varepsilon$, notamment lorsque la réception de messages $\mathcal{M}_{d(q)}$ reçus par les modules de communication directe 1060 s'effectue par « détection d'activité vocale » ou VAD.

Dans des modes de réalisation, un procédé de supervision des communications sans fil critiques peut alors être mis en oeuvre par un ou plusieurs équipements compris dans système de communication sans fil critique 10. Un équipement peut être un dispositif de communication sans fil critique et/ou le centre de communication 210 par exemple. Le procédé de supervision des communications sans fil critiques peut consister à générer une structure de donnée, également appelée 'matrice de connectivité', telle qu'une table de données comprenant des informations relatives au mode de communication directe (i.e. portée radio directe) et à l'état du mode de communication relayée (i.e. portée du réseau) d'une partie ou de l'ensemble des dispositifs de communication sans fil critique compris dans le système de communication sans fil critique 10.

Un dispositif de communication 100-q « hors ligne » peut transmettre un message de communication directe $\mathcal{M}_{d(q)}$ à un dispositif de communication 100-n « en ligne », agencé à portée radio directe du dispositif de communication 100-q. Dans certains modes de réalisation, le dispositif de communication 100-n peut être configuré pour répéter ce message $\mathcal{M}_{d(q)}$ par l'intermédiaire du mode de communication relayée, de manière à le transmettre par exemple à d'autres dispositifs de communication sans fil critiques du système de communication sans fil critique 10. Dans ce cas, suivant une commande de répétition donnée, le module de gestion 1040 du dispositif de communication 100-n peut être en outre configuré pour déterminer un message dit « message à répéter » de communication relayée, noté

$\mathcal{M}_{r(q\rightarrow n)}$, à partir du message reçu de communication directe $\mathcal{M}_{d(q)}$ transmis par le dispositif de communication 100-q, de l'identifiant unique $i_{r(n)}$ du module de communication relayée 1080 du dispositif communication 100-n et de l'identifiant déterminé $i_{d(q)}$ associé au dispositif de communication 100-q. Le dispositif de communication 100-n peut alors être configuré pour émettre, uniquement via son module de communication relayée 1080, le message à répéter de communication relayée $\mathcal{M}_{r(q\rightarrow n)}$.

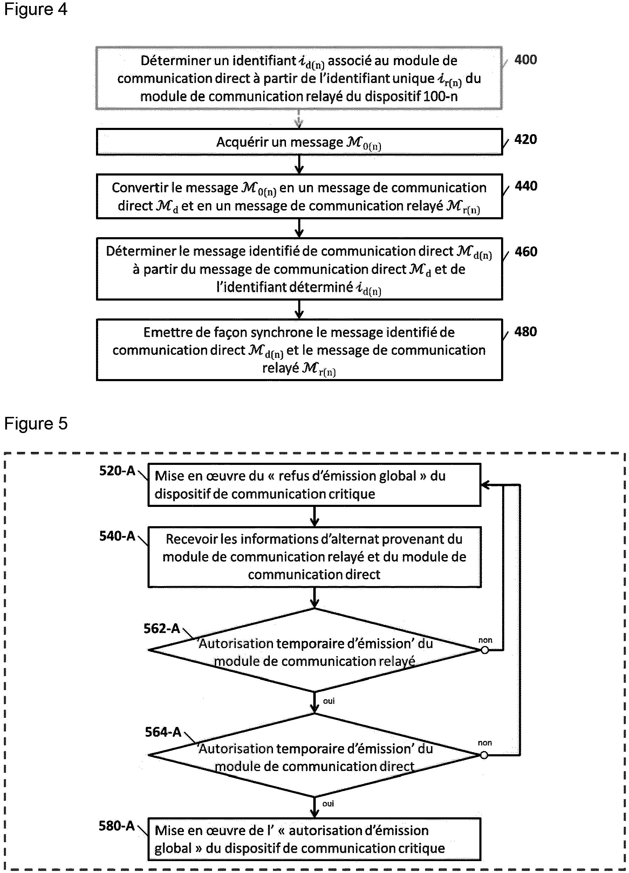

La figure 4 est un organigramme décrivant le procédé de gestion de communication sans fil critique, mis en oeuvre par un dispositif de communication 100-n, pour l'émission d'un message, selon des modes de réalisation de l'invention.

A l'étape 400 d'initialisation du dispositif de communication 100-n, l'identifiant $i_{d(n)}$ associé au module de communication directe 1060 du dispositif 100-n est déterminé à partir de l'identification unique $i_{r(n)}$ du module de communication relayée 1080 du dispositif 100-n.

A l'étape 420, le message $\mathcal{M}_{0(n)}$ est acquis via le module d'acquisition de message 1020.

A l'étape 440, le message $\mathcal{M}_{0(n)}$ est converti en un message de communication directe $\mathcal{M}_d$ en fonction du protocole de communication directe et en un message de communication relayée $\mathcal{M}_{r(n)}$ en fonction du protocole de communication relayée.

A l'étape 460, le message identifié de communication directe $\mathcal{M}_{d(n)}$ est déterminé à partir du message de communication directe $\mathcal{M}_d$ et de l'identifiant associé $i_{d(n)}$.

A l'étape 480, le message identifié de communication directe $\mathcal{M}_{d(n)}$ et le message de communication relayée $\mathcal{M}_{r(n)}$ sont transmis de façon synchrone (et donc par redondance) respectivement par l'intermédiaire du mode de communication directe par le module de communication directe 1060 et du mode de communication relayée par le module de communication relayée 1080.

L'homme du métier comprendra aisément que les étapes 440 et 460 peuvent être réalisées de manière simultanée et/ou selon un ordre différent, par exemple un ordre donné défini par le module de gestion 1040.

La figure 5 est un organigramme décrivant des sous-étapes du procédé de gestion de communication sans fil critique pour l'émission d'un message, mis en oeuvre par un dispositif de communication 100-n, selon des modes de réalisation de l'invention.

A l'étape 520-A, un état de « refus d'émission global » est déclenché et mis en oeuvre par le dispositif de communication 100-n. Cet état de « refus d'émission global » peut être l'état par défaut du dispositif 100-n.

A l'étape 540-A, le module de gestion 1040 reçoit les informations d'alternat provenant du module de communication relayée 1080 et du module de communication directe 1060. Par exemple et sans limitation, ces informations d'alternat peuvent comprendre une donnée indiquant un 'refus d'émission' (donnée de refus d'émission) ou une donnée indiquant une 'autorisation temporaire d'émission' (donnée d'autorisation temporaire d'émission).

Aux étapes 562-A et 564-A, le module de gestion 1040 évalue les données contenues dans les informations d'alternat. Si au moins une donnée des modules de communication relayée 1080 et/ou direct 1060 contient une donnée de 'refus d'émission', alors l'état « refus d'émission global » du dispositif de communication 100-n est maintenu.

A l'étape 580-A, si le module de communication relayée 1080 et le module de communication directe 1060 transmettent chacun au module de gestion 1040 une donnée indiquant une 'autorisation temporaire d'émission', alors un état d'« autorisation temporaire d'émission globale » du dispositif de communication 100-n est déclenché.

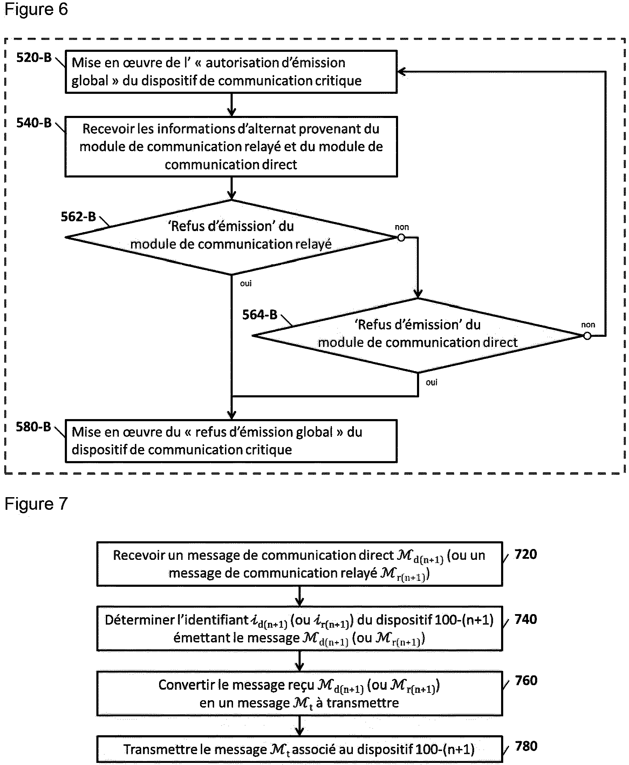

De manière équivalente, la figure 6 est un organigramme selon des modes de réalisation de l'invention décrivant des sous-étapes du procédé de gestion de communication sans fil critique pour l'émission d'un message, mis en oeuvre par un dispositif de communication 100-n.

A l'étape 520-B, l'état d'« autorisation temporaire d'émission global » est déclenché et mis en oeuvre par le dispositif de communication 100-n.

A l'étape 540-B, le module de gestion 1040 reçoit les informations d'alternat provenant du module de communication relayée 1080 et du module de communication directe 1060. Par exemple et sans limitation, ces informations d'alternat peuvent comprendre une donnée de 'refus d'émission' ou une donnée d'autorisation d'émission'.

Aux étapes 562-B et 564-B, le module de gestion 1040 évalue les données contenues dans les informations d'alternat. Si au moins une donnée des modules de communication relayée 1080 et/ou direct 1060 contient une donnée de 'refus d'émission', alors un état de « refus d'émission global » du dispositif de communication 100-n est déclenché à l'étape 580-B ; sinon l'état d'« autorisation temporaire d'émission globale » du dispositif de communication 100-n est maintenu.

L'homme du métier comprendra aisément que les étapes 562-A et 564-A (ou 562-B et 564-B) peuvent être réalisées de manière simultanée et/ou selon un ordre différent, par exemple un ordre donné défini par le module de gestion 1040.

La figure 7 est un organigramme selon des modes de réalisation de l'invention décrivant des étapes du procédé de gestion de communication sans fil critique pour la réception d'un message, mis en oeuvre par un dispositif de communication 100-n.

A l'étape 720, un message de communication directe $\mathcal{M}_{d(n+1)}$ (ou un message de communication relayée $\mathcal{M}_{r(n+1)}$) émis par un dispositif de communication 100-(n+1) est reçu par le dispositif de communication 100-n, par l'intermédiaire du mode de communication directe par le module de communication directe 1060 (ou du mode de communication relayée par le module de communication relayée 1080).

A l'étape 740, l'identifiant $i_{d(n+1)}$ (ou l'identifiant $i_{r(n+1)}$) du dispositif de communication 100-(n+1) est déterminé à partir de données d'identification du message reçu $\mathcal{M}_{d(n+1)}$ (ou $\mathcal{M}_{r(n+1)}$).

A l'étape 760, le message reçu $\mathcal{M}_{d(n+1)}$ (ou $\mathcal{M}_{r(n+1)}$) est converti en un message $\mathcal{M}_t$ à transmettre à l'utilisateur U-n.

A l'étape 780, le message $\mathcal{M}_t$ est transmis via le module d'acquisition de message 1020.

L'homme du métier comprendra aisément que les étapes 740 et 760 peuvent être réalisées de manière simultanée et/ou selon un ordre différent, par exemple un ordre défini par le module de gestion 1040.

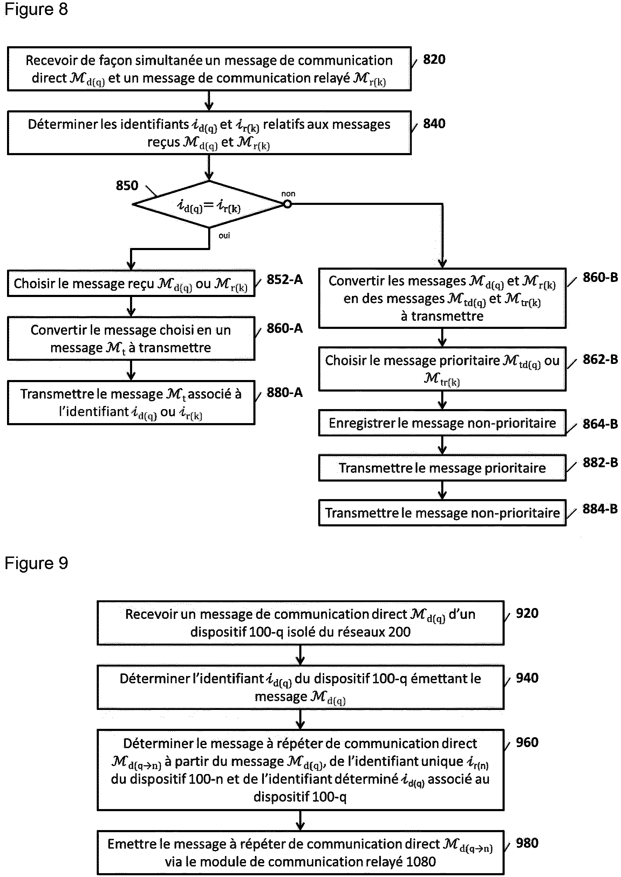

La figure 8 est un organigramme selon des modes de réalisation de l'invention décrivant des étapes et sous-étapes du procédé de gestion de communication sans fil critique pour la réception d'un message, mis en oeuvre par un dispositif de communication 100-n.

A l'étape 820, le message de communication directe $\mathcal{M}_{d(q)}$ et le message de communication relayée $\mathcal{M}_{r(k)}$ sont reçus par le dispositif de communication 100-n, par l'intermédiaire respectivement du mode de communication directe par le module de communication directe 1060 et du mode de communication relayée par le module de communication relayée 1080.

A l'étape 840, les identifiants $i_{d(q)}$ et $i_{r(k)}$ sont déterminés à partir respectivement du message reçu de communication directe $\mathcal{M}_{d(q)}$ et du message

reçu de communication relayée $\mathcal{M}_{r(k)}$ .

A l'étape 850, les identifiants $i_{d(q)}$ et $i_{r(k)}$ sont comparés.

Si les identifiants $i_{d(q)}$ et $i_{r(k)}$ sont associés à un même dispositif de communication 100-(n+1), alors à l'étape 852-A, le message reçu de communication directe $\mathcal{M}_{d(q)}$ (ou le message reçu de communication relayée $\mathcal{M}_{r(k)}$ ) est choisi en utilisant un ou plusieurs paramètres de sélection.

A l'étape 860-A, le message reçu choisi $\mathcal{M}_{d(q)}$ (ou $\mathcal{M}_{r(k)}$ ) est converti en un message $\mathcal{M}_t$ à transmettre (ou 'message converti') à l'utilisateur U-n.

A l'étape 880-A, le message $\mathcal{M}_t$ est transmis via le module d'acquisition de message 1020.

L'homme du métier comprendra aisément que les étapes 852-A et 860-A peuvent être réalisées de manière simultanée et/ou selon un ordre différent, par exemple un ordre défini par le module de gestion 1040.

Si les identifiants $i_{d(q)}$ et $i_{r(k)}$ sont associés à deux dispositifs de communication 100-q et 100-k distincts, alors à l'étape 860-B, le message reçu $\mathcal{M}_{d(q)}$ et le message reçu $\mathcal{M}_{r(k)}$ sont convertis en deux messages distincts $\mathcal{M}_{td(q)}$ et $\mathcal{M}_{tr(k)}$ à transmettre à l'utilisateur U-n.

A l'étape 862-B, le message à transmettre $\mathcal{M}_{td(q)}$ (ou le message à transmettre $\mathcal{M}_{tr(k)}$ ) est choisi à partir de un ou plusieurs paramètres de priorité pour générer un message prioritaire $\mathcal{M}_{td(q)}$ (ou $\mathcal{M}_{tr(k)}$ ) et un message non-prioritaire $\mathcal{M}_{tr(k)}$ (ou $\mathcal{M}_{td(q)}$ ). L'homme du métier comprendra aisément que cette étape 862-B de sélection est équivalente à un choix d'un message à transmettre parmi les messages reçus de communication directe $\mathcal{M}_{d(q)}$ et de communication relayée $\mathcal{M}_{r(k)}$ .

A l'étape 864-B, le message non-prioritaire $\mathcal{M}_{tr(k)}$ (ou $\mathcal{M}_{td(q)}$ ) est enregistré, et à l'étape 882-B, le message prioritaire $\mathcal{M}_{td(q)}$ (ou $\mathcal{M}_{tr(k)}$ ) est transmis via le module d'acquisition de message 1020.

A l'étape 884-B, le message non-prioritaire $\mathcal{M}_{tr(k)}$ (ou $\mathcal{M}_{td(q)}$ ) est transmis via le module d'acquisition de message 1020.

L'homme du métier comprendra aisément que les étapes 860-B, 862-B, 864-B et/ou 882-B peuvent être réalisées de manière simultanée et/ou selon un ordre différent, par exemple un ordre défini par le module de gestion 1040.

La figure 9 est un organigramme selon des modes de réalisation de l'invention décrivant de sous-étapes du procédé de gestion de communication sans fil critique pour la réception et l'émission d'un message, mis en oeuvre par un dispositif de communication 100-n.

A l'étape 920, un message de communication directe $\mathcal{M}_{d(q)}$ émis par un dispositif de communication 100-q est reçu par le dispositif de communication 100-n, via le mode de communication directe par le module de communication directe 1060.

A l'étape 940, l'identifiant $i_{d(q)}$ du dispositif de communication 100-q est déterminé à partir de données d'identification du message reçu $\mathcal{M}_{d(q)}$ par le dispositif de communication 100-n.

A l'étape 960, le message à répéter de communication relayée $\mathcal{M}_{r(q \to n)}$ est déterminé, par le dispositif de communication 100-n, à partir du message reçu de communication directe $\mathcal{M}_{d(q)}$ transmis par le dispositif de communication 100-q, de l'identifiant unique $i_{r(n)}$ du module de communication relayée 1080 du dispositif communication 100-n et de l'identifiant déterminé $i_{d(q)}$ associé au dispositif de communication 100-q.

A l'étape 980, le message à répéter de communication relayée $\mathcal{M}_{r(q \to n)}$ est transmis via le mode de communication relayée par le module de communication relayée 1080 du dispositif communication 100-n.

L'homme du métier comprendra que les dispositifs de communication critique, selon les modes de réalisation de l'invention, peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur.

Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différents modules de gestion, de communication relayée et/ou de communication directe, décrits à titre d'exemples non limitatif.

## Revendications

1. Dispositif de communication sans fil critique (100-n) comprenant un module d'acquisition et de transmission de message (1020), un module de communication directe (1060) et un module de communication relayée (1080), ledit module d'acquisition et de transmission de message (1020) étant configuré pour acquérir un message initial $\mathcal{M}_{0(n)}$, ledit module de communication directe (1060) fonctionnant selon un protocole de communication directe, ledit module de communication relayée (1080) fonctionnant selon un protocole de communication relayée, c'est-à-dire avec connexion à une infrastructure réseau, et étant associé à un identifiant unique $i_{r(n)}$, **caractérisé en ce que** le dispositif comprend en outre un module de gestion (1040) configuré pour déterminer un identifiant $i_{d(n)}$ associé audit module de communication directe (1060) à partir de l'identifiant unique $i_{r(n)}$, et **en ce que** ledit module de gestion (1040) est configuré pour convertir ledit message $\mathcal{M}_{0(n)}$ en un message de communication directe $\mathcal{M}_d$ en fonction dudit protocole de communication directe et en un message de communication relayée $\mathcal{M}_{r(n)}$ en fonction dudit protocole de communication relayée du module, ledit module de gestion (1040) étant en outre configuré pour déterminer un message identifié de communication directe $\mathcal{M}_{d(n)}$ à partir dudit message de communication directe $\mathcal{M}_d$ et dudit identifiant associé $i_{d(n)}$, ledit module de communication directe (1060) étant configuré pour émettre ledit message identifié de communication directe $\mathcal{M}_{d(n)}$ et ledit module de communication relayée (1080) étant configuré pour émettre ledit message de communication relayée $\mathcal{M}_{r(n)}$ de manière synchrone avec l'émission dudit message identifié de communication directe $\mathcal{M}_{d(n)}$ par ledit module de communication directe (1060).

2. Dispositif de communication sans fil critique (100-n), selon la revendication 1, dans lequel ledit module de gestion (1040) est en outre configuré pour appliquer une fonction f audit identifiant unique $i_{r(n)}$ pour générer ledit identifiant $i_{d(n)}$ associé audit module de communication directe (1060), ledit identifiant unique $i_{r(n)}$ étant défini dans un format MSISDN, et dans lequel ladite fonction f est une fonction de troncature.

3. Dispositif de communication sans fil critique (100-n), selon l'une des revendications 1 ou 2, dans lequel ledit module de communication directe (1060) et ledit module de communication relayée (1080) comprennent chacun une unité de contrôle d'émission configurée pour contrôler des refus d'émission et/ou des autorisations temporaires d'émission de message de communication directe $\mathcal{M}_{d(n)}$ et de message de communication relayée $\mathcal{M}_{r(n)}$, et dans lequel ledit module de gestion (1040) est configuré pour générer un refus d'émission global dudit dispositif de communication (100-n) et/ou des autorisations temporaires d'émission globales dudit dispositif de communication (100-n) en fonction des refus d'émission et/ou des autorisations temporaires d'émission desdits modules de communication (1060) et (1080).

4. Dispositif de communication sans fil critique (100-n), selon l'une des revendications 1 à 3, dans lequel ledit module de communication directe (1060) est configuré pour recevoir un message identifié de communication directe $\mathcal{M}_{d(q)}$ et/ou ledit module de communication relayée (1080) est configuré pour recevoir un message de communication relayée $\mathcal{M}_{r(n)}$, ledit module de gestion (1040) étant configuré pour convertir ledit message reçu de communication directe $\mathcal{M}_{d(q)}$ en un message à transmettre $\mathcal{M}_{td(q)}$ et/ou ledit message reçu de communication relayée $\mathcal{M}_{r(k)}$ en un message à transmettre $\mathcal{M}_{tr(k)}$, ledit module d'acquisition et de transmission de message (1020) étant configuré pour transmettre ledit message à transmettre $\mathcal{M}_{td(q)}$ et/ou ledit message à transmettre $\mathcal{M}_{tr(k)}$, et dans lequel ledit message identifié de communication directe $\mathcal{M}_{d(q)}$ et/ou ledit message de communication relayée $\mathcal{M}_{r(k)}$ sont transmis par au moins un autre dispositif de communication sans fil critique distinct du premier dispositif de communication (100-n).

5. Dispositif de communication sans fil critique (100-n), selon la revendication 4, dans lequel ledit module de gestion (1040) est en outre configuré pour déterminer un identifiant $i_{d(q)}$ relatif au dispositif de communication (100-q) ayant transmis le message reçu de communication directe $\mathcal{M}_{d(q)}$ et/ou d'un identifiant $i_{r(k)}$ relatif au dispositif de communication (100-k) ayant transmis le message reçu de communication relayée $\mathcal{M}_{r(k)}$.

6. Dispositif de communication sans fil critique (100-n), selon la revendication 5, dans lequel ledit module de gestion (1040) est configuré pour comparer l'identifiant $i_{d(q)}$ et l'identifiant $i_{r(k)}$ pour déterminer si ledit message identifié de communication directe $\mathcal{M}_{d(q)}$ et ledit message de communication relayée $\mathcal{M}_{r(k)}$ sont transmis par un même dispositif de communication (100-(n+1)), ou si ledit message identifié de communication directe $\mathcal{M}_{d(q)}$ est transmis par un deuxième dispositif de communication (100-q) tandis que ledit message de communication relayée $\mathcal{M}_{r(k)}$ est transmis par un troisième dispositif de communication (100-k), en fonction de ladite comparaison, et dans lequel ledit module de gestion (1040) est configuré pour sélectionner un message à transmettre parmi les messages reçus de communication directe $\mathcal{M}_{d(q)}$ et de communication relayée $\mathcal{M}_{r(k)}$, et en fonction de paramètres donnés.

7. Dispositif de communication sans fil critique (100-n), selon l'une des revendications 4 à 6, dans lequel ledit module de gestion (1040) est en outre configuré pour déterminer un message à répéter de communication relayée $\mathcal{M}_{r(q \to n)}$ à partir dudit message reçu de communication directe $\mathcal{M}_{d(q)}$ transmis par un deuxième dispositif de communication (100-q), dudit identifiant unique $i_{r(n)}$ du module de communication relayée (1080) du dispositif communication (100-n) et dudit identifiant déterminé $i_{d(q)}$ associé audit deuxième dispositif de communication (100-q), et dans lequel ledit module de communication relayée (1080) est configuré pour émettre ledit message à répéter de communication relayée $\mathcal{M}_{r(q \to n)}$.

8. Système de communication sans fil critique (10) comprenant un centre de communication (210) et une infrastructure réseau configurée pour mettre en oeuvre d'un réseau d'interconnexion (200), **caractérisé en ce que** le système comprend un ensemble de dispositifs de communication (100) définis selon l'une des revendications 1 à 7.

9. Procédé de gestion de communication sans fil critique, mis en oeuvre dans un système comprenant au moins un premier dispositif de communication (100-n) comprenant un module d'acquisition et de transmission de message (1020), un module de communication directe (1060) et un module de communication relayée (1080), ledit module de communication directe (1060) fonctionnant selon un protocole de communication directe, ledit module de communication relayée (1080) fonctionnant selon un protocole de communication relayée et comprenant un identifiant unique $i_{r(n)}$, **caractérisé en ce que** le procédé comprend une étape d'initialisation consistant à déterminer (400) un identifiant $i_{d(n)}$ associé audit module de communication directe (1060) à partir de l'identifiant unique $i_{r(n)}$, et **en ce que** le procédé comprend en outre les étapes consistant à :

   - acquérir (420) un message $\mathcal{M}_{0(n)}$ via le module d'acquisition et de transmission de message (1020),
   - convertir (440) ledit message $\mathcal{M}_{0(n)}$ en un message de communication directe $\mathcal{M}_{d}$ en fonction dudit protocole de communication directe et en un message de communication relayée $\mathcal{M}_{r(n)}$ en fonction dudit protocole de communication relayée du module,

- déterminer (460) un message identifié de communication directe $\mathcal{M}_{d(n)}$ à partir dudit message de communication directe $\mathcal{M}_d$ et de ladite donnée d'identification $i_{d(n)}$,
- émettre (480) de façon synchrone ledit message identifié de communication directe $\mathcal{M}_{d(n)}$ et ledit message de communication relayée $\mathcal{M}_{r(n)}$, respectivement via ledit module de communication directe (1060) et via ledit module de communication relayée (1080).

10. Procédé de gestion de communication sans fil critique, selon la revendication 9, dans lequel le procédé comprend en outre les étapes consistant à :

- recevoir (720, 820, 920) via ledit module de communication directe (1060) un message identifié de communication directe $\mathcal{M}_{d(q)}$ et/ou recevoir via ledit module de communication relayée (1080) au moins un message de communication relayée $\mathcal{M}_{r(k)}$,
- convertir (760, 860-A, 860-B) ledit message reçu de communication directe $\mathcal{M}_{d(q)}$ en un message à transmettre $\mathcal{M}_{td(q)}$ et/ou ledit message reçu de communication relayée $\mathcal{M}_{r(k)}$ en un message à transmettre $\mathcal{M}_{tr(k)}$,
- transmettre (780, 880-A, 882-B, 884-B) ledit message à transmettre $\mathcal{M}_{td(q)}$ et/ou ledit message à transmettre $\mathcal{M}_{tr(k)}$ via le module d'acquisition et de transmission de message (1020),

et dans lequel ledit message identifié de communication directe $\mathcal{M}_{d(q)}$ et ledit message de communication relayée $\mathcal{M}_{r(k)}$ sont transmis par au moins un autre dispositif de communication sans fil critique distinct du premier dispositif de communication (100-n).

11. Procédé de gestion de communication sans fil critique, selon la revendication 10, dans lequel le procédé comprend en outre les étapes consistant à déterminer (740, 840, 940) l'identifiant $i_{d(q)}$ relatif au dispositif de communication (100-q) ayant transmis ledit message reçu de communication directe $\mathcal{M}_{d(q)}$ et/ou l'identifiant $i_{r(k)}$ relatif au dispositif de communication sans fil critique ayant transmis ledit message reçu de communication relayée $\mathcal{M}_{r(k)}$,

12. Procédé de gestion de communication sans fil critique, selon la revendication 11, dans lequel le procédé comprend en outre les étapes consistant à :

- comparer (850) l'identifiant $i_{d(q)}$ et l'identifiant $i_{r(k)}$ pour déterminer si ledit message identifié de communication directe $\mathcal{M}_{d(q)}$ et ledit message de communication relayée $\mathcal{M}_{r(k)}$ sont transmis par un même dispositif de communication (100-(n+1)), ou si ledit message identifié de communication directe $\mathcal{M}_{d(q)}$ est transmis par un deuxième dispositif de communication (100-q) tandis que ledit message de communication relayée $\mathcal{M}_{r(k)}$ est transmis par un troisième dispositif de communication (100-k), en fonction de ladite comparaison,
- sélectionner (852-A, 862-B) un message à transmettre parmi les messages reçus de communication directe $\mathcal{M}_{d(q)}$ et de communication relayée $\mathcal{M}_{r(k)}$, et en fonction de paramètres donnés.

13. Procédé de gestion de communication sans fil critique, selon l'une des revendications 10 à 12, dans lequel le procédé comprend en outre les étapes consistant à :

- déterminer (960) un message à répéter de communication relayée $\mathcal{M}_{r(q\to n)}$ à partir dudit message reçu de communication directe $\mathcal{M}_{d(q)}$ transmis par un deuxième dispositif de communication (100-q), dudit identifiant unique $i_{r(n)}$ du module de communication relayée (1080) du dispositif communication (100-n) et dudit identifiant déterminé $i_{d(q)}$ associé audit deuxième dispositif de communication (100-q),

- émettre (980) ledit message à répéter de com-

munication relayée $\mathcal{M}_{r(q \to n)}$ via ledit module de communication relayée (1080).

Figure 1

Figure 2

Figure 3

Figure 4

| Déterminer un identifiant $i_{d(n)}$ associé au module de communication direct à partir de l'identifiant unique $i_{r(n)}$ du module de communication relayé du dispositif 100-n | 400 |

↓

| Acquérir un message $\mathcal{M}_{0(n)}$ | 420 |

↓

| Convertir le message $\mathcal{M}_{0(n)}$ en un message de communication direct $\mathcal{M}_d$ et en un message de communication relayé $\mathcal{M}_{r(n)}$ | 440 |

↓

| Déterminer le message identifié de communication direct $\mathcal{M}_{d(n)}$ à partir du message de communication direct $\mathcal{M}_d$ et de l'identifiant déterminé $i_{d(n)}$ | 460 |

↓

| Emettre de façon synchrone le message identifié de communication direct $\mathcal{M}_{d(n)}$ et le message de communication relayé $\mathcal{M}_{r(n)}$ | 480 |

Figure 5

520-A — Mise en œuvre du « refus d'émission global » du dispositif de communication critique

↓

540-A — Recevoir les informations d'alternat provenant du module de communication relayé et du module de communication direct

↓

562-A — 'Autorisation temporaire d'émission' du module de communication relayé — non

↓ oui

564-A — 'Autorisation temporaire d'émission' du module de communication direct — non

↓ oui

580-A — Mise en œuvre de l' « autorisation d'émission global » du dispositif de communication critique

Figure 6

**520-B** Mise en œuvre de l' « autorisation d'émission global » du dispositif de communication critique

**540-B** Recevoir les informations d'alternat provenant du module de communication relayé et du module de communication direct

**562-B** 'Refus d'émission' du module de communication relayé — non

oui

**564-B** 'Refus d'émission' du module de communication direct — non

oui

**580-B** Mise en œuvre du « refus d'émission global » du dispositif de communication critique

Figure 7

Recevoir un message de communication direct $\mathcal{M}_{d(n+1)}$ (ou un message de communication relayé $\mathcal{M}_{r(n+1)}$) — **720**

Déterminer l'identifiant $i_{d(n+1)}$ (ou $i_{r(n+1)}$) du dispositif 100-(n+1) émettant le message $\mathcal{M}_{d(n+1)}$ (ou $\mathcal{M}_{r(n+1)}$) — **740**

Convertir le message reçu $\mathcal{M}_{d(n+1)}$ (ou $\mathcal{M}_{r(n+1)}$) en un message $\mathcal{M}_t$ à transmettre — **760**

Transmettre le message $\mathcal{M}_t$ associé au dispositif 100-(n+1) — **780**

Figure 8

Recevoir de façon simultanée un message de communication direct $\mathcal{M}_{d(q)}$ et un message de communication relayé $\mathcal{M}_{r(k)}$ — 820

Déterminer les identifiants $i_{d(q)}$ et $i_{r(k)}$ relatifs aux messages reçus $\mathcal{M}_{d(q)}$ et $\mathcal{M}_{r(k)}$ — 840

850 — $i_{d(q)} = i_{r(k)}$ — non / oui

Choisir le message reçu $\mathcal{M}_{d(q)}$ ou $\mathcal{M}_{r(k)}$ — 852-A

Convertir le message choisi en un message $\mathcal{M}_t$ à transmettre — 860-A

Transmettre le message $\mathcal{M}_t$ associé à l'identifiant $i_{d(q)}$ ou $i_{r(k)}$ — 880-A

Convertir les messages $\mathcal{M}_{d(q)}$ et $\mathcal{M}_{r(k)}$ en des messages $\mathcal{M}_{td(q)}$ et $\mathcal{M}_{tr(k)}$ à transmettre — 860-B

Choisir le message prioritaire $\mathcal{M}_{td(q)}$ ou $\mathcal{M}_{tr(k)}$ — 862-B

Enregistrer le message non-prioritaire — 864-B

Transmettre le message prioritaire — 882-B

Transmettre le message non-prioritaire — 884-B

Figure 9

Recevoir un message de communication direct $\mathcal{M}_{d(q)}$ d'un dispositif 100-q isolé du réseaux 200 — 920

Déterminer l'identifiant $i_{d(q)}$ du dispositif 100-q émettant le message $\mathcal{M}_{d(q)}$ — 940

Déterminer le message à répéter de communication direct $\mathcal{M}_{d(q \to n)}$ à partir du message $\mathcal{M}_{d(q)}$, de l'identifiant unique $i_{r(n)}$ du dispositif 100-n et de l'identifiant déterminé $i_{d(q)}$ associé au dispositif 100-q — 960

Emettre le message à répéter de communication direct $\mathcal{M}_{d(q \to n)}$ via le module de communication relayé 1080 — 980

Europäisches
Patentamt

European
Patent Office

Office européen
des brevets

# RAPPORT DE RECHERCHE EUROPEENNE

Numéro de la demande

**EP 23 19 5197**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | "LTE; 5G; Mission Critical Services Common Requirements (MCCoRe); Stage 1 (3GPP TS 22.280 version 17.7.0 Release 17)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP SA, no. V17.7.0 10 mai 2022 (2022-05-10), pages 1-102, XP014435524, Extrait de l'Internet: URL:http://www.etsi.org/deliver/etsi_ts/122200_122299/122280/17.07.00_60/ts_122280v170700p.pdf [extrait le 2022-05-10] | 1,3-13 | INV. H04W84/18 |
| A | * page 49 – page 57 * * page 25 * | 2 | |
| Y | HUANG JINGRU ET AL: "LTE-based MCPTT Architecture for Next Generation Railway Dispatching Communication System", 2018 16TH INTERNATIONAL CONFERENCE ON INTELLIGENT TRANSPORTATION SYSTEMS TELECOMMUNICATIONS (ITST), IEEE, 15 octobre 2018 (2018-10-15), pages 1-7, XP033469097, DOI: 10.1109/ITST.2018.8566738 | 1,3-13 | DOMAINES TECHNIQUES RECHERCHES (IPC) H04W |
| A | * page 3; figure 4 * | 2 | |
| A | US 2018/199301 A1 (HORI TAKAKO [JP] ET AL) 12 juillet 2018 (2018-07-12) * figure 3 * | 1-13 | |
| A | WO 2020/114568 A1 (NOKIA TECHNOLOGIES OY [FI]) 11 juin 2020 (2020-06-11) * alinéa [0115] * | 1-13 | |

Le présent rapport a été établi pour toutes les revendications

| Lieu de la recherche | Date d'achèvement de la recherche | Examinateur |
|---|---|---|
| Munich | 15 janvier 2024 | Tessier, Serge |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 19 5197

15-01-2024

| Document brevet cité au rapport de recherche | Date de publication | Membre(s) de la famille de brevet(s) | Date de publication |
|---|---|---|---|
| US 2018199301 A1 | 12-07-2018 | JP WO2017051503 A1 | 12-07-2018 |
| | | US 2018199301 A1 | 12-07-2018 |
| | | WO 2017051503 A1 | 30-03-2017 |
| WO 2020114568 A1 | 11-06-2020 | EP 3881644 A1 | 22-09-2021 |
| | | US 2022039199 A1 | 03-02-2022 |
| | | WO 2020114568 A1 | 11-06-2020 |

EPO FORM P0460